(19) Europäisches Patentamt / European Patent Office / Office européen des brevets

(11) **EP 3 881 149 B1**

(12) **FASCICULE DE BREVET EUROPEEN**

(45) Date de publication et mention
de la délivrance du brevet:
**22.01.2025 Bulletin 2025/04**

(21) Numéro de dépôt: **19829269.0**

(22) Date de dépôt: **12.11.2019**

(51) Classification Internationale des Brevets (IPC):
**G05B 23/02** *(2006.01)* **B63B 25/16** *(2006.01)*

(52) Classification Coopérative des Brevets (CPC):
**G05B 23/0283; B63B 25/16; B63B 71/00;
B63B 79/00;** F17C 2260/015; F17C 2260/016

(86) Numéro de dépôt international:
**PCT/FR2019/052680**

(87) Numéro de publication internationale:
**WO 2020/099772 (22.05.2020 Gazette 2020/21)**

(54) **PROCEDE DE GESTION DE LA MAINTENANCE POUR UN NAVIRE**

WARTUNGSVERWALTUNGSVERFAHREN FÜR EIN SCHIFF

MAINTENANCE MANAGEMENT METHOD FOR A SHIP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.11.2018 FR 1860552**

(43) Date de publication de la demande:
**22.09.2021 Bulletin 2021/38**

(73) Titulaire: **Gaztransport et Technigaz**
**78470 Saint-Rémy-lès-Chevreuse (FR)**

(72) Inventeurs:
• **DUPONT, Nicolas**
**78470 SAINT REMY LES CHEVREUSE (FR)**
• **OUVRARD, Florent**
**78470 SAINT REMY LES CHEVREUSE (FR)**

(74) Mandataire: **Loyer & Abello**
**9, rue Anatole de la Forge**
**75017 Paris (FR)**

(56) Documents cités:
**US-A1- 2005 107 963    US-A1- 2016 229 492
US-A1- 2017 183 062    US-B1- 8 643 509**

## Description

### Domaine technique

L'invention se rapporte à un procédé de gestion de la maintenance pour un navire comportant une ou plusieurs cuves. Plus particulièrement, l'invention se rapporte à l'inspection et à l'entretien de cuve étanches et thermiquement isolantes pour le transport de gaz liquéfié. Dans ce document, le terme « navire » désigne un moyen transporteur de gaz liquéfié entre deux points du globe ou une unité flottante de traitement et/ou de stockage d'un ou plusieurs gaz liquéfiés

### Arrière-plan technologique

Les cuves étanches et thermiquement isolantes sont couramment utilisées pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être destinées au transport de gaz liquéfié et/ou à recevoir du gaz liquéfié servant de carburant pour la propulsion de l'ouvrage flottant. De nombreux gaz liquéfiés peuvent aussi être envisagés, notamment le méthane, l'éthane, le propane, le butane ou l'éthylène.

Les cuves de navire peuvent être des cuves à membrane d'étanchéité simple ou double qui permettent un transport à la pression atmosphérique. Les membranes d'étanchéité sont généralement réalisées en fine feuille d'acier inoxydable ou en Invar. Une membrane est généralement en contact direct avec le gaz liquéfié.

Durant son transport, le liquide contenu dans une cuve est soumis à différents mouvements. En particulier, les mouvements en mer d'un navire, par exemple sous l'effet des conditions climatiques telles que l'état de la mer ou le vent, entraînent une agitation du liquide dans la cuve. L'agitation du liquide, généralement désignée sous le terme de « sloshing » ou ballotement, engendre des contraintes sur les parois de la cuve qui peuvent nuire à l'intégrité de la cuve.

Ces phénomènes de ballotement apparaissent sur des navires transporteurs de gaz naturel, ci-après GNL, ou des méthaniers ainsi que sur des navires de stockage ancrés appelés FPSO (de l'anglais : Floating Production Storage & Offloading) telles que par exemple une plate-forme d'extraction et une usine de liquéfaction de gaz naturel, communément appelée FLNG (de l'anglais : Floating Liquefied Natural Gas) ou une unité flottante de stockage et de regazéification, communément appelée FSRU (de l'anglais : Floating Storage and Regaseification Unit), c'est-à-dire plus généralement un support flottant de production, de stockage et d'exportation. Les phénomènes de ballottement se produisent aussi bien dans des conditions de mer agitée que dans des conditions de mer presque tranquille, dès lors que la cargaison de gaz liquéfié entre en résonance avec l'excitation créée par une houle, même faible, à laquelle est soumis le navire. Dans ces cas de résonance, le ballotement peut devenir extrêmement violent notamment lors des déferlements sur les parois verticales ou dans les angles, risquant ainsi de détériorer le système de confinement du gaz liquéfié, ou le système d'isolation présent juste derrière ledit système de confinement.

Or, l'intégrité de la cuve est particulièrement importante dans le cadre d'une cuve de gaz liquéfié, tel que par exemple du GNL, de par la nature inflammable ou explosive du liquide transporté et le risque de point froid sur la coque en acier de l'unité flottante en cas de fuite.

Le brevet US 8,643,509 dévoile une méthode de réduction du risque lié au ballottement d'une cargaison de gaz liquéfié. Dans ce document, une fréquence de résonance du liquide dans une cuve est estimée en fonction de la cuve et de son niveau de remplissage. Durant le transport, une fréquence de mouvement du navire est évaluée en fonction des conditions climatiques et maritimes et de la vitesse du navire. Des fréquences de mouvement prévisionnelles sont aussi évaluées sur la route à suivre du navire. Lorsque l'une des fréquences de mouvement se rapproche trop de la fréquence de résonnance du liquide dans une cuve, une alarme est signalée pour changer de route et/ou changer la vitesse du navire afin d'éviter de se retrouver dans une situation à risqué.

La demande de brevet US2005107963A1 dévoile une méthode pour évaluer l'intégrité d'une structure, en récupérant des données relatives aux dimensions de ladite structure ainsi que des données relatives à une estimation d'une charge comprise dans la structure et en créant un modèle par ordinateur de la structure, dans le but de déterminer des zones soumises à de fortes contraintes.

La demande de brevet US2017183062A1 dévoile un système ayant pour but de suivre les changements physiques d'une structure marine. Ce système comprend des instruments de mesure optique, qui permettent de détecter des changements structurels et des changements de comportement de ladite structure marine.

La demande de brevet US2016229492A1 dévoile une méthode de contrôle d'un chargement, le chargement étant un fluide soumis à une force interne ou externe. Un contrôleur basé sur de la dynamique des fluides permet de suivre et de prédire les forces qui s'exercent.

Malgré la mise en place de mesure de réduction de ballotement, le ballotement des liquides dans les cuves, en particulier du fait des phénomènes de résonnance, peut entraîner des risques ponctuels de déformation de la membrane primaire d'étanchéité primaire, d'endommagement des structures sous-jacentes présentes dans les espaces primaire et/ou secondaire sur lesquelles repose la membrane d'étanchéité primaire, des chutes d'objets, en particulier provenant d'équipement statique, susceptibles d'endommager à court/moyen terme la membrane d'étanchéité primaire, ou plus généralement des déformation de la membrane d'étanchéité primaire au-delà de ses tolérances structurelles. Des visites d'inspection de cuve sont prévues dans la maintenance préventive des navires afin de vérifier le bon état des cuves. Cependant, une inspection de cuve nécessite une vidange complète de la cuve, ce qui immobilise le navire, ou rend inutilisable les cuves de stockage d'une unité flottante, pendant un certain temps. Classiquement, sur un navire disposant de plusieurs cuves, une majorité, voire la totalité, sont inspectées, ce qui représente une inactivité très coûteuse. Or, dans la plupart des cas la visite d'inspection peut ne révéler aucun défaut ou aucune défaillance nécessitant une réparation, ce qui veut également dire que l'inspection était superflue et que le navire a été immobilisé inutilement. En effet, le coût d'immobilisation d'une cuve par exemple dû à une inspection, a un impact sur la rentabilité du navire, autrement dit, une inspection de cuve induit un risque non négligeable d'immobilisation superflue.

## Résumé

Une idée à la base de l'invention est de déterminer un niveau de risque potentiel d'endommagement d'une cuve d'un navire en fonction de ce que la cuve a subi au cours de sa vie, ce niveau de risque potentiel d'endommagement d'une cuve est assimilable à un « indice d'usure » représentatif du vieillissement réel de la cuve. A cet effet, un indice de ballottement de liquide est déterminé en fonction des mouvements du navire pendant que celui-ci navigue entre deux points ou en stationnaire. Cet indice de ballottement de liquide est mémorisé et intégré dans le temps pour obtenir l'indice d'usure de la cuve. L'indice d'usure est ensuite utilisé pour déclencher une inspection de cuve et/ou déterminer la cuve potentiellement la plus endommagée parmi toutes les cuves d'un navire.

Selon un premier mode de réalisation, l'invention fournit un procédé de gestion de la maintenance selon la revendication 5.

Grâce à l'utilisation du premier seuil, une inspection de cuve peut être décidée sur la base d'un critère objectif représentant l'usure potentielle de la cuve. Le premier seuil peut être fixé de différentes manière. Selon un mode de réalisation, le premier seuil peut être fixé de manière absolue indiquant un niveau d'usure à partir duquel une cuve doit être inspectée. Selon un autre mode de réalisation, le premier seuil est une valeur relative qui indique la cuve ayant subi une usure potentiellement plus importante qu'une autre cuve.

L'historique des indices de ballotement se rapporte par exemple à un enregistrement des indices de ballotement courant des liquides depuis la mise en service du navire ou depuis la dernière réparation, partielle ou totale, de la cuve. Ainsi, l'indice de ballotement courant des liquides vient incrémenter un indice d'usure, disponible à tout moment, lui-même dérivant des indices de ballotement courant précédemment mesurés/enregistrés.

Selon un mode de réalisation préféré, le navire comporte une pluralité de cuves, un indice d'usure est déterminé pour chaque cuve et le premier seuil correspond à un indice d'usure d'une autre cuve afin d'indiquer qu'une inspection de la cuve qui possède l'indice d'usure le plus élevé doit être réalisée.

Selon différents modes de réalisations, un tel procédé peut comporter un ou plusieurs des caractéristiques suivantes.

Une fois qu'une cuve est indiquée comme étant celle qui a dépassé le premier seuil, on peut réaliser une inspection de la cuve indiquée.

Après inspection de la cuve correspondant à l'indice d'usure le plus élevé, et si cette cuve inspectée est endommagée alors on peut déterminer la cuve suivante qui doit être inspectée comme étant la cuve ayant l'indice d'usure le plus élevé des cuves restantes. Et ainsi de suite, l'inspection des cuves se fait dans l'ordre décroissant des indices d'usure jusqu'à une inspection de cuve ne montrant aucune défaillance nécessitant une réparation, partielle ou totale.

Grâce au procédé, après l'inspection d'une cuve, et si cette cuve n'est pas endommagée alors on peut arrêter l'inspection des cuves.

La comparaison de l'indice d'usure au premier seuil peut être faite lors d'une opération de maintenance du navire ou indépendamment d'une opération de maintenance.

Selon une variante, déterminer un état courant de mouvement du navire comporte une détermination d'au moins un des paramètres suivants : hauteur des vagues, période des vagues, incidence des vagues par rapport à l'orientation du navire, vitesse du navire, vibrations du navire, mouvements mesurés du navire.

Par mouvements mesurés du navire, il faut comprendre une mesure d'un ou plusieurs mouvements effectifs du navire. Selon cette variante, déterminer des mouvements mesurés du navire peut comporter une mesure d'accélération en translation et en rotation selon trois axes perpendiculaires entre eux.

Selon une autre variante, déterminer un indice de ballottement courant prend en compte au moins un parmi les paramètres additionnels d'état de structure suivants : nombre de cycle thermique subis par la cuve, élongation du navire, niveau de raidissage de la coque, nature du gaz liquéfié, niveau de remplissage des ballasts.

Selon un autre exemple de réalisation, intégrer l'indice de ballottement courant correspond à une sommation d'indices de ballottement courants, les indices étant calculés successivement au cours de période de mesure successives.

Selon un deuxième mode de réalisation, l'invention fournit aussi un système de gestion de la maintenance selon la revendication 1.

Selon un exemple de réalisation, le dispositif d'évaluation des mouvements du navire comporte une station météo qui mesure la hauteur, la fréquence et la direction des vagues dans l'environnement du navire.

Selon un autre exemple de réalisation, le dispositif d'évaluation des mouvements du navire comporte des accéléromètres placés dans le navire.

Dans un exemple préféré, le moyen de traitement est en partie situé dans une station de contrôle à terre et communique par exemple par radio ou à l'aide d'autres moyens de télécommunication avec le navire pour recevoir des informations relatives au niveau courant de remplissage de la au moins une cuve et à l'état courant de mouvement du navire.

Dans un autre exemple, le navire de transport de gaz liquéfié comporte une pluralité de cuves étanches et thermiquement isolantes et un système de gestion pour chacune de ses cuves.

## Brève description des figures

. L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[fig.1] est une représentation schématique d'un navire de transport de gaz liquéfié,

[fig.2] représente un système de gestion intégré dans le navire de la fig 1,

[Fig 3] représente un système de gestion selon un autre mode de réalisation,

[Fig 4] est un organigramme représentant un procédé de mise à jour d'un indice d'usure,

[Fig 5] est un organigramme représentant un procédé de gestion de la maintenance des cuves d'un navire.

## Description des modes de réalisation

Les modes de réalisation ci-après sont décrits en relation avec un navire comportant une double coque formant une structure porteuse dans laquelle sont agencées une pluralité de cuves étanches et thermiquement isolantes. Dans une telle structure porteuse, les cuves présentent par exemple une géométrie polyédrique, par exemple de forme prismatique.

De telles cuves étanches et thermiquement isolantes sont prévues par exemple pour le transport de gaz liquéfié. Le gaz liquéfié est stocké et transporté dans de telles cuves à une température basse ce qui nécessite des parois de cuve thermiquement isolantes afin de maintenir le gaz liquéfié à cette température. Il est donc particulièrement important de maintenir intacte l'intégrité des parois de cuves, y compris les espaces d'isolation thermiques situés sous la membrane d'étanchéité, d'une part pour conserver l'étanchéité de la cuve et éviter les fuites de gaz liquéfié hors des cuves et, d'autre part, éviter les dégradations des caractéristiques isolantes de la cuve afin de maintenir le gaz sous sa forme liquéfiée.

De telles cuves étanches et thermiquement isolantes comportent aussi une barrière isolante ancrée sur la double coque de navire et portant au moins une membrane étanche. A titre d'exemple, de telles cuves peuvent être réalisées selon les technologies commercialisées sous les marques Mark III® ou NO96® de la déposante, ou autres.

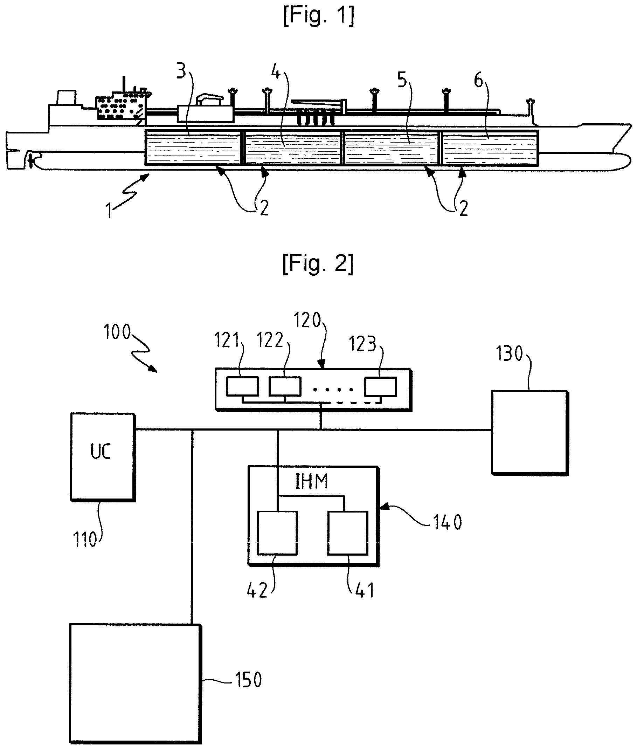

La figure 1 illustre un navire 1 comportant quatre cuves 2 étanches et thermiquement isolantes. Les quatre cuves 2 peuvent présenter des états de remplissage identiques ou différents. Lorsqu'il est en mer, le navire 1 est sujet à de nombreux mouvements liés aux conditions de navigation. Ces mouvements du navire 1 se répercutent sur le liquide contenu dans les cuves 3, 4, 5, 6 qui, en conséquence, est sujet à des déplacements dans les cuves 3, 4, 5, 6. Ces mouvements du liquide dans les cuves 3, 4, 5, 6 génèrent des impacts sur les parois de cuves 3, 4, 5, 6 qui peuvent endommager les cuves de manière immédiate s'ils sont trop violents. En outre, le martelage répété des parois des cuves 3, 4, 5, 6 à des niveaux élevés et non destructifs peut entrainer une dégradation d'usure par fatigue desdites parois. Or il est important de conserver l'intégrité des parois de cuves 3, 4, 5, 6 pour conserver l'étanchéité et les caractéristiques d'isolation des cuves 3, 4, 5, 6.

Il est connu d'éviter d'avoir des conditions de navigation critiques pour éviter des mouvements de liquide qui risquent d'endommager la cuve de manière immédiate. Pour ce qui est de l'endommagement lié à l'usure des matériaux martelés, seules des visites régulières d'inspection de cuve permettent de déceler un état d'endommagement. Une inspection de cuve nécessite une vidange totale de la cuve afin que l'on puisse rentrer dans la cuve. Ce type d'opération est relativement long et immobilise le navire pour une longue période. Afin d'optimiser les visites de cuve, l'invention propose de déterminer un indice d'usure de cuve pour décider de l'opportunité d'une telle inspection.

L'indice d'usure d'une cuve de navire doit être représentatif d'un risque d'endommagement de la cuve en fonction des chocs subis liés au ballottement de la cargaison de gaz liquéfié. Le risque d'endommagement d'une cuve cryogénique de navire peut s'exprimer par la formule suivante :

[Math 1]

$$Risque = \iint_{cuve} \int_0^T Prob(Pres(dS,t) > Res(dS)|\, nr(t), mvt(t)).\, dS.\, dt$$

Dans laquelle :

- nr(t) représente un niveau de remplissage de la cuve à un instant t,
- mvt(t) représente un mouvement de la cuve à un instant t,
- Pres(dS,t) représente la pression exercée sur une surface élémentaire dS de la cuve à un instant t,
- Res(dS) représente la résistance d'une surface élémentaire dS de la cuve,
- Prob(Pres(dS,t)>Res(dS)|nr(t), mvt(t)) représente une probabilité d'avoir une pression sur une surface élémentaire supérieure à sa résistance en fonction du niveau de remplissage de la cuve et du mouvement de la cuve,
- T est la période sur laquelle on établit le risque d'endommagement.

Un indicateur d'usure de cuve peut-être produit en appliquant une approximation de cette formule aux conditions de vie réelle de ladite cuve. Ainsi, en fonction de ce que la cuve aura réellement vécu, l'indicateur d'usure donnera une valeur représentative d'une probabilité d'endommagement.

La figure 2 illustre un exemple de système de gestion 100 embarqué sur le navire 1. Ce système de gestion 100 comporte une unité centrale 110 connectée à une pluralité de capteurs 120 embarqués permettant d'obtenir différentes mesures de paramètres. Ainsi, les capteurs 120 comportent, par exemples et de manière non exhaustive, au moins un capteur de niveau de remplissage 121, pour chaque cuve, différents capteurs de mouvements 122 du navire (tachymètre, cap) et des capteurs de conditions maritimes 123. Le système de gestion 100 comporte également une interface de communication 130 permettant à l'unité centrale 110 de communiquer avec des dispositifs distants par exemple pour obtenir des données météorologiques, des données de position du navire ou autre.

Le nombre et le type de capteurs de mouvement 122 et de conditions maritimes 123 dépend de choix de l'homme du métier pour déterminer le mouvement subit par le navire et d'éventuelles redondances de mesure. Dans un mode de réalisation préféré, le capteur de conditions maritimes comprend une station météo qui mesure la hauteur, la fréquence et la direction des vagues dans l'environnement du navire. Alternativement, les conditions maritimes peuvent ne pas être mesurées et simplement déduites d'informations météo en fonction de la position exacte du navire. Toutefois, il est préférable d'avoir une certaine redondance en cas de panne de certains capteurs.

Le système de gestion 100 comporte en outre une interface homme-machine 140. Cette interface homme machine 140 comporte un moyen d'affichage 41. Ce moyen d'affichage 41 permet à l'opérateur d'obtenir les différentes informations de gestions calculées par le système ou les mesures obtenues par les capteurs 120 ou même un état de ballottement courant.

L'interface homme-machine 140 comporte en outre un moyen d'acquisition 42 permettant à l'opérateur de fournir manuellement des grandeurs à l'unité centrale 110, typiquement pour fournir à l'unité centrale 110 des données ne pouvant pas être obtenues par des capteurs car le navire ne comporte pas le capteur nécessaire ou que ce dernier est endommagé. Par exemple, dans un mode de réalisation, le moyen d'acquisition permet à l'opérateur d'entrer des informations sur la hauteur des vagues à partir d'une observation visuelle.

Le système de gestion 100 comporte une base de données 150. Cette base de données 150 permet de mémoriser toutes les mesures effectuées durant la navigation. Selon un mode de réalisation préféré, la base de données comporte certaines grandeurs obtenues en laboratoire ou lors de campagnes de mesures embarquées en mer.

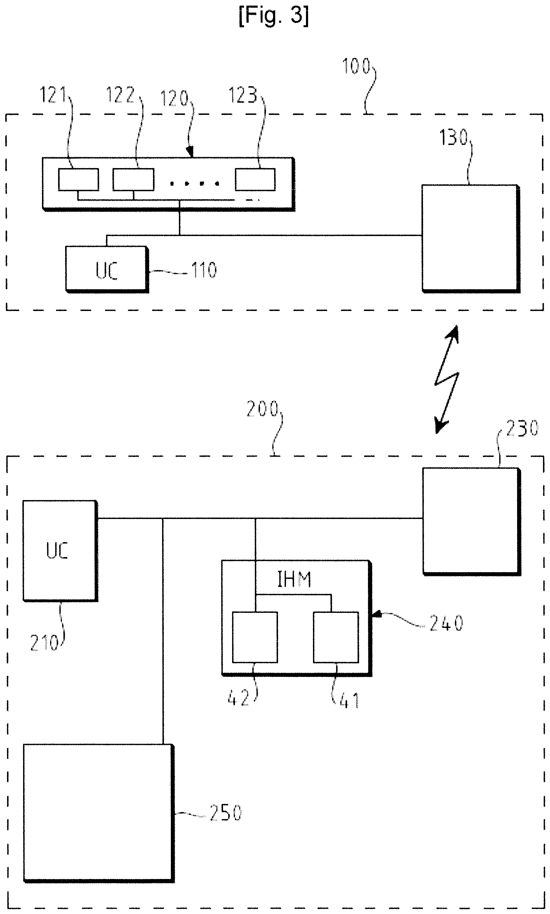

La figure 3 illustre un exemple de système de gestion 200 situé à terre et communiquant avec le navire 1. Le navire comporte l'unité centrale 110, les capteurs 120 et une interface de communication 130. Le système de gestion 200 comporte une unité centrale 210, une interface de communication 230, une interface homme machine 240 et une base de données 250. Le fonctionnement du système de gestion 200 est similaire au fonctionnement du système de gestion 100 et ne se différentie que par l'envoi des informations mesurées par les capteurs 120 du navire 1 au système de gestion 200 situé à terre par l'intermédiaire des interfaces de communication 130 et 230. A titre d'exemple, les interfaces de communication peuvent utiliser une transmission de données par radiofréquence terrestre ou satellite.

**EP 3 881 149 B1**

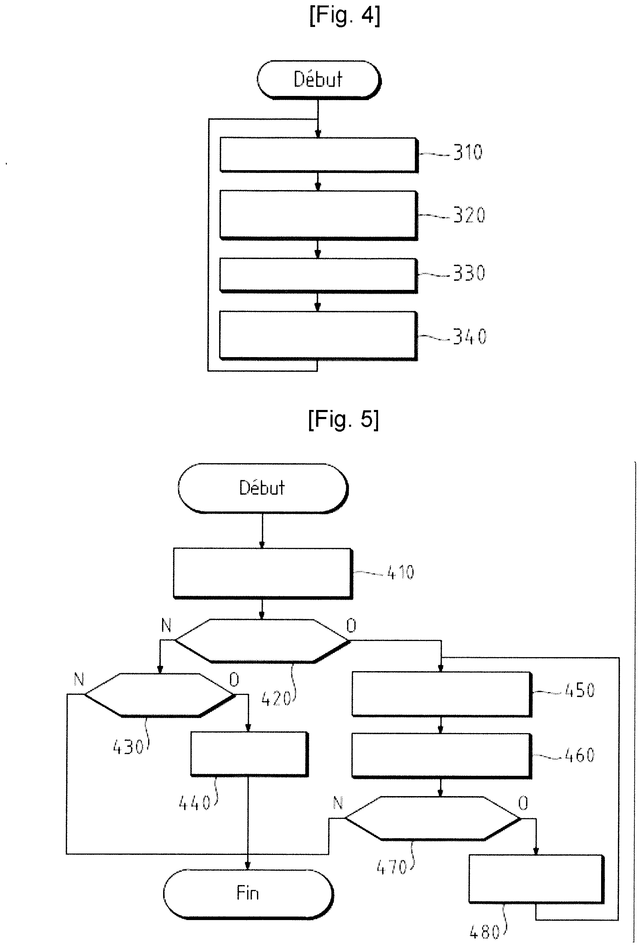

Un exemple de mise à jour d'un indice d'usure est illustré sur l'organigramme de la figure 4. Selon un premier mode de réalisation, cette mise à jour est réalisée en totalité sur l'unité centrale 110 formant un moyen de traitement unique. Selon un deuxième mode réalisation, cette mise à jour est réalisée en partie sur l'unité centrale 110 et en partie sur l'unité centrale 210, l'ensemble formant un moyen de traitement partagé. Au cours d'une première étape 310, le capteur de niveau de remplissage 121 de chaque cuve du navire mesure le niveau de liquide dans chaque cuve 3, 4, 5, 6 pour déterminer le niveau courant de remplissage de chaque cuve i. Puis au cours d'une deuxième étape 320, les capteurs de mouvement 122 et de conditions maritimes 123 envoie des informations à l'unité centrale 110 pour déterminer un état courant de mouvement du navire.

Afin de simplifier les calculs, il est préféré de réaliser des mesures sur une durée élémentaire pendant laquelle on considère les mesures comme étant stationnaires. A titre d'exemple, une durée élémentaire d'une heure convient. Ainsi, les mesures de niveau de remplissage courant peuvent être des mesures moyennes sur une heure ce qui permet de s'affranchir des mouvements du liquide pour effectuer cette mesure. Pour ce qui est de l'état courant de mouvement du navire, il est possible de considérer soit une mesure moyenne soit la mesure de pire cas sur la durée élémentaire. Par exemple, si sur la durée élémentaire, les capteurs de conditions maritimes mesurent des vagues de 2 mètres et des vagues de 8 mètres, la mesure retenue correspondra à des vagues de 8 mètres. Par contre pour ce qui est de la fréquence des vagues, une mesure moyenne peut convenir.

Une fois les mesures effectuées, un indice de ballotement IBi courant est calculé pour chaque cuve au cours d'une étape 330. La détermination de l'indice de ballotement IBi courant peut se faire de différentes manières en fonction des différentes mesures réalisées du niveau de remplissage de la cuve et de l'état de mouvement courant du navire, en prenant en compte la position et la géométrie de la cuve.

A titre d'exemple, un premier mode de réalisation simplifié non conforme aux revendications annexées ne prend en compte que le niveau de remplissage moyen d'une cuve et la hauteur maximale des vagues sur une heure. Selon ce premier mode de réalisation, une table de correspondance contenue dans la base de données 150 ou 250 est utilisée pour déterminer l'indice de ballotement IBi correspondant à l'aide d'une simple lecture dans la table en fonction des mesures réalisées. La table de correspondance peut être réalisée lors d'une campagne de mesures sur une cuve ayant un profil géométrique similaire et sur lequel le nombre et la force des impacts de liquide sur les parois de la cuve ont été mesurés. Le résultat de ces mesures est ensuite placé dans une table de correspondance tel que la tableau 1, ci-après :

[Tableaux 1]

| | | Hauteur de vague (m) | | | | |
|---|---|---|---|---|---|---|
| | | 0-4 | 4-8 | 8-12 | 12-16 | 16+ |
| Niveau de remplissage de cuve (%) | 0-5 | 1 | 2 | 3 | 4 | 5 |
| | 5-15 | 3 | 6 | 9 | 12 | 15 |
| | 15-30 | 2 | 4 | 6 | 8 | 10 |
| | 30-70 | 0 | 0 | 0 | 0 | 0 |
| | 70-85 | 1 | 2 | 3 | 4 | 5 |
| | 85-95 | 2 | 4 | 6 | 8 | 10 |
| | 95-99 | 1 | 2 | 3 | 4 | 5 |

En fonction du niveau de remplissage et en fonction de la hauteur de vague, on vient lire directement la valeur de l'indice de ballotement IB courant qui prend en compte la géométrie de la cuve. Bien évidemment, plus la table est grande, plus l'indice de ballotement IB courant est précis. En outre, une table doit correspondre à chaque cuve du navire car le ballottement du liquide dépend, entre autres, de la forme de la cuve et de sa position sur le navire.

L'utilisation d'un unique paramètre de mouvement, tel que la hauteur des vagues, n'est pas suffisant pour permettre de déterminer de manière précise l'effet de ballotement et ne permet que d'avoir une indication grossière. En effet, il est possible d'utiliser bien d'autres paramètres pour déterminer le ballotement de liquide tels que la fréquence des vagues, l'angle d'incidence des vagues sur le navire, la vitesse d'avance du navire. En outre, des paramètres secondaires peuvent aussi être ajouté tels que la force et la direction du vent et des courants. L'utilisation d'une table de correspondance avec un nombre d'entrées plus important peut être envisagé. Il est également possible de traiter les données avant de les utiliser dans la table. Par exemple, la fréquence des vagues, l'incidence des vagues et la vitesse du navire peuvent être combinées en une fréquence de vague perçue par le navire permettant ainsi de réduire ces trois paramètres à un seul et donc de réduire la taille de la table tout en prenant en compte plusieurs paramètres. Une autre possibilité est de déterminer plusieurs tables qui donneront chacune un indice partiel de ballotement et de regrouper ces indices entre eux, par exemple à l'aide d'une multiplication des indices partiels.

L'utilisation d'une table permet en outre de prendre en compte des causes indirectes de mouvement telles que les vibrations du navire, de la barge ou simplement de la cuve, lesdites vibrations étant générées par exemple par la motorisation ou les pâles des hélices du navire. L'amplitude et la fréquence des vibrations peuvent faire l'objet de deux entrées d'une table obtenue par expérimentation sur une cuve de dimension similaire.

Une autre possibilité consiste à réaliser une mesure effective de l'agitation du navire en faisant abstraction de l'état de la mer. Les capteurs 120 déterminent des mouvements mesurés du navire, par exemple en mesurant les accélérations subies par le navire selon trois axes perpendiculaires en translation et en rotation. Pour apprécier les mouvements du navire, on pourra utiliser avantageusement une Unité de Mesure Inertielle, ci-après UMI, qui consiste en un ou plusieurs accéléromètres et/ou un ou plusieurs gyroscopes, par exemple gyroscope mécanique, et/ou un ou plusieurs magnétomètres. Ces unités de mesure, dans l'hypothèse où l'on en utilise plusieurs (du même type ou de deux types différents), sont avantageusement réparties sur le navire de manière à relever une mesure précise du mouvement du navire. On notera qu'une UMI est parfois communément désignée en tant que MRU (de l'anglais Motion Reference Unit). Là encore, une table de correspondance peut être utilisée, la table disposant d'une entrée pour chacune des mesures.

En variante, il est également possible de calculer un indice représentatif de l'agitation du liquide dans la cuve de manière différente. Par exemple, la fréquence de résonance du liquide dans la cuve est calculée en fonction du niveau de liquide et de la géométrie de la cuve. Une fréquence d'oscillation moyenne du navire est ensuite déterminée par exemple en mesurant la fréquence moyenne et l'amplitude moyenne d'oscillation du navire à l'aide d'accéléromètres. Un indice de ballotement IBi courant peut être proportionnel à l'amplitude d'oscillation du navire tout en étant inversement proportionnel à la différence entre la fréquence de résonance de la cuve et la fréquence d'oscillation du navire.

Pour la détermination de l'indice de ballotement instantané, il est également possible de prendre en compte des paramètres additionnels d'état de structure qui peuvent avoir une influence sur le risque d'endommagement de la cuve. La cuve subit de grandes variations thermiques qui ont pour effet d'allonger et de rétrécir la cuve. Les cycles thermiques subis par la cuve ont également un effet d'usure qui fragilise celle-ci. Un coefficient multiplicateur de l'indice de ballottement instantané peut prendre en compte le nombre de cycles thermiques traduisant ainsi l'augmentation du risque de dommage lié au ballottement en fonction du nombre de cycles thermiques. Les cycles thermiques peuvent être également pondérés en fonction du contenant liquide de la cuve dont la température peut varier et donc faisant varier l'amplitude du cycle thermique.

Un autre paramètre additionnel concerne l'élongation du navire, autrement dit la variation de la longueur de la structure flottante. Le navire étant métallique des variations de longueur se produisent en fonction de la température de la mer et du soleil. Ces variations de longueur se font de manière indépendante de la dilatation des membranes des cuves qui est liée à la température du gaz liquéfié. Ces différences de dilatation entraînent des contraintes supplémentaires au niveau des membranes qui peuvent fragiliser plus ou moins les membranes. Là aussi, l'introduction d'un facteur multiplicateur peut prendre en compte ces phénomènes, par exemple en majorant de 10% l'indice de ballotement instantané lorsque les contraintes causées par l'élongation sont au-delà d'un seuil prédéterminé.

Le niveau de raidissage de la coque, ou la flexibilité de la coque peut également être pris en compte, en particulier lorsque la ou les cuves sont installées dans un navire mobile. Lorsque le navire subit des vagues, celui-ci va se tordre plus ou moins en fonction de sa position par rapport à la vague. La déformation engendrée entraine des contraintes sur les cuves qu'il faut prendre en compte dans la détermination de l'indice de ballotement instantané.

La nature du liquide cryogénique transportée peut influencer la détermination de l'indice de ballottement instantané. La composition du gaz liquéfié fait varier sa densité et sa fluidité changeant ainsi les effets liés au ballottement de manière positive, négative ou simplement par changement de la fréquence de résonance du liquide dans la cuve. Si la cuve est destinée à plusieurs type de gaz, un paramètre additionnel propre à la nature du liquide cryogénique transporté doit être pris en compte pour la détermination de l'indice de ballottement instantané.

La hauteur de la colonne liquide dans les ballasts est un autre paramètre additionnel que l'on peut prendre en compte dans le calcul de l'indice de ballotement instantanée. Sur certains navire les ballasts peuvent être en contact direct avec la paroi qui supporte la cuve. L'eau de mer située dans les ballasts est également sujette au ballottement. Cependant, en fonction du remplissage des ballasts, les phénomènes de ballottement dans la cuve et dans les ballasts peuvent s'amplifier ou s'amortir. Seule la structure du navire permet de déterminer les effets qui en découlent.

Une fois que l'indice de ballotement IBi courant est déterminé pour chaque cuve du navire pour la durée élémentaire, il convient de l'intégrer dans un indice d'usure IUi de cuve au cours d'une étape 340. L'indice de ballottement étant calculé sur une période élémentaire donnée, une simple mise à jour par sommation de l'indice de ballotement IBi courant dans l'indice d'usure IUi précédemment calculé est suffisante pour déterminer un indice d'usure IUi qui prend en compte l'historique des indices de ballotement, par exemple depuis la mise en service du navire.

L'indice de ballotement IBi et l'indice d'usure IUi n'ont pas d'unité car il s'agit d'une probabilité d'endommagement. En outre la grandeur de ces indices IBi et IUi dépend de la précision de calcul que l'on souhaite obtenir. La personne expérimentée sera à même de déterminer quelle est la grandeur à utiliser avec ces indices. A titre, d'exemple avec un indice de ballotement IBi courant déterminé pour une heure qui peut être compris entre 0 et 15, l'indice d'usure IUi cumulé

sur une durée de vie du navire de 30 ans est compris entre 0 et 4 millions.

Selon un deuxième mode de réalisation, l'organigramme de la figure 4 est partiellement réalisé sur le système de gestion 200 à terre qui communique avec le navire. Suivant ce deuxième mode de réalisation, le navire 1 transmet à la station à terre toutes les informations provenant des capteurs 120. Selon une variante, les indices de ballottement IBi sont calculés et mémorisés sur le navire pendant le trajet et le calcul de l'indice d'usure IUi est réalisée uniquement à l'arrivée du navire au port après transmission des indices de ballotement IBi calculés pendant toute la durée du trajet effectué par le navire.

L'indice d'usure IUi étant calculé, celui-ci est exploité par le système de gestion de la maintenance à l'aide de l'organigramme de la figure 5 qui est par exemple utilisé lors de chaque arrivée à bon port. Cet organigramme comporte des étapes réalisées par le personnel de maintenance et d'autres qui sont réalisées par le système de gestion 100 ou 200. Suivant le niveau d'automatisation de la maintenance, certaines étapes pourront être réalisée soit par le personnel de maintenance, soit par le système. Une étape 410 récupère les indices d'usure IUi de toutes les cuves du navire. Un premier test 420 est réalisé pour déterminer si une visite de cuve doit être envisagée au vu de la date courante ou du nombre de jours de mer effectués par le navire.

Si aucune visite n'est planifiée, un test 430 compare les indices d'usure IUi à un seuil de visite SV correspondant à un risque d'endommagement élevé qui ne doit normalement pas être atteint avant une date de visite. Lorsque le seuil de visite SV est atteint par un ou plusieurs indices d'usure IUi, il convient d'indiquer qu'une inspection de cuve doit être réalisée pour chacune des cuves qui a atteint le seuil SV, par exemple en activant une alarme visuelle ou sonore au court d'une étape 440. Ainsi, l'équipage est averti qu'il convient d'effectuer une visite de cuve à l'arrivée au port pour la ou les cuves concernées. Si le seuil SV n'est pas dépassé, ou après avoir effectué l'étape 440, l'organigramme se termine.

Si le test 420 détermine qu'une visite de cuve est planifiée alors une étape 450 permet de déterminer la cuve qui possède l'indice d'usure le plus élevé. Pour cela, chaque indice d'usure IUi est comparé avec les indices d'usure IUi de toutes les autres cuves afin de déterminer la cuve qui a l'indice d'usure le plus élevé Max(IUi).

Une fois que l'indice d'usure le plus élevé Max(IUi) est déterminé, le système de gestion signale la cuve correspondante au cours d'une étape 460 et une inspection est réalisée uniquement pour cette cuve.

Suite à l'inspection de la cuve, un nouveau test 470 est réalisé pour déterminer si une autre cuve doit être inspectée. Ce test 470 consiste à vérifier si la cuve visitée est endommagée ou pas. Si la cuve n'est pas endommagée, il n'est pas nécessaire de visiter les autres cuves qui ont, d'après les indices d'usure IUi, moins de risque de dommage. Si, par contre, la cuve est endommagée alors il convient de réaliser l'étape 480.

L'étape 480 revient à retirer l'indice d'usure correspondant à la cuve endommagée qui vient d'être inspectée des indices d'usure du navire avant de procéder à nouveau à l'étape 450 pour déterminer la cuve suivante qui doit être inspectée qui est la cuve ayant l'indice d'usure le plus élevé des cuves restantes. Si cette cuve est elle-même endommagée, alors on continue de visiter les cuves dans l'ordre décroissant des indices d'usure IUi.

Si la visite d'une cuve ne révèle aucun défaut ou aucune défaillance nécessitant au moins une réparation, alors les autres cuves n'ont pas besoin d'être visitées. Une telle méthode permet de réduire significativement le nombre de cuves visitées. Le nombre de cuve inspecté est réduit au nombre de cuves endommagées plus 1, ce qui permet d'éviter de vidanger toutes les cuves.

Comme indiqué, l'automatisation peut être plus ou moins poussée. Selon un mode de réalisation peu automatisé, le système de gestion 100 et 200 se contente de mémoriser les indicateurs d'usure IUi et de les comparer entre eux et par rapport au seuil SV. Le système de gestion affiche alors les indicateurs d'usure IUi dans un ordre décroissant avec un indicateur visuel, par exemple rouge/vert, qui indique si le seuil SV est dépassé. Dans cette configuration, seules les étapes 410, 430 et 450 sont mises en oeuvre par le système de gestion 100 ou 200 et le reste de l'organigramme de la figure 5 est réalisé par le personnel de maintenance.

Selon un mode de réalisation très automatisé, seules les visites d'inspection des étapes 440 et 460 sont réalisées par le personnel de maintenance, le résultat de la visite étant enregistré dans le système.

Selon une variante, l'étape 460 peut également réaliser une comparaison de l'indice d'usure Max(IUi) avec un seuil d'usure minimal en dessous duquel, il n'est pas nécessaire de réaliser de visite de cuve. Ceci permet de s'affranchir d'une visite de cuve inutile.

En variante, le test 430 et l'étape 440 peuvent être supprimée. En effet, le seuil de visite SV doit être relativement élevé pour éviter des visites de cuve à chaque voyage. Si le seuil est très élevé, il peut s'avérer inutile.

Selon une autre variante, on peut aussi considérer que les date de visite n'ont pas de raison d'être et au contraire considérer que seul le seuil de visite SV est utilisé pour déclencher les visites. Dans ce cas, le test 430 peut indiquer que plusieurs cuves ont un indice d'usure IUi supérieur au seuil SV. Afin d'éviter de visiter plusieurs cuves, l'étape 440 peut être remplacées par des étapes correspondant aux étapes 450 à 480 de sorte qu'une seule cuve est inspectée si elles ne sont pas endommagées.

Dans le cas où le seuil SV est atteint et où aucune cuve n'est endommagée, il convient de rehausser le seuil SV à une nouvelle valeur que l'on rentre avec le moyen d'acquisition 42.

Dans le cas où une visite de cuve conclut à une cuve endommagée, cette cuve doit être réparée soit immédiatement soit lors d'un arrêt ultérieur au port mais la cuve sera considérée hors d'usage en attendant d'être réparée. Une cuve hors d'usage peut être ignoré lors de la réalisation de l'organigramme de la figure 5.

Tant qu'aucune réparation n'est réalisée sur une cuve, il convient de conserver un indice d'usure représentatif de l'usure de la cuve depuis la fabrication du navire. Une fois que la cuve est réparée, il se peut que l'indice d'usure ne soit plus représentatif de l'état d'usure de cette cuve et qu'il convienne de modifier cet indice. Dans le cas où la réparation de cuve consiste à refaire en quasi-totalité la cuve, la cuve refaite peut être considérée comme neuve et donc il convient de remettre son indice d'usure IUi à zéro à l'aide du moyen d'acquisition 42 Si, par contre seule une réparation partielle de la cuve a été faite et que certaines traces d'usure considérés mineures n'ont pas entrainés de réparations, l'indice d'usure peut être réduit ou conservé à l'identique. Notamment, si la réparation concerne une surface minime de la cuve, l'indice reste inchangé.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

**Revendications**

1. Système de gestion de la maintenance (100, 200) pour un navire comportant au moins une cuve étanche et thermiquement isolante pour transporter du gaz liquéfié, le système comportant :

   - au moins un capteur de niveau de remplissage (121, 230) de cuve pour mesurer un niveau courant de remplissage de la au moins une cuve,
   - un dispositif d'évaluation des mouvements du navire (122, 123, 130, 230) apte à déterminer un état courant de mouvement du navire,
   - un moyen de traitement (110, 210) configuré pour:

      - déterminer (330) un indice de ballottement (IBi) courant à partir du niveau courant de remplissage de la cuve et de l'état courant de mouvement du navire, en prenant en compte la position et la géométrie de la cuve, dans lequel l'indice de ballottement (IBi) courant est obtenu par la lecture d'une valeur dans une table de correspondance à plusieurs entrées, une entrée correspondant au remplissage de la cuve, au moins une entrée correspondant à l'état courant de mouvement du navire et la valeur lue étant représentative d'une probabilité de détérioration de la cuve lorsqu'elle subit l'état courant du mouvement du navire,
      - intégrer (340) l'indice de ballottement (IBi) courant déterminé dans un indice d'usure (IUi) qui prend en compte un historique des indices de ballottement,
      - comparer (430, 450) l'indice d'usure à un premier seuil,

      - un dispositif d'avertissement (41) indiquant si une inspection de la au moins une cuve doit être réalisée (440, 460) en fonction du résultat de la comparaison.

2. Système selon la revendication 1 dans lequel le dispositif d'évaluation des mouvements du navire (123) comporte une station météo qui mesure la hauteur, la fréquence et la direction des vagues dans l'environnement du navire.

3. Système selon la revendication 1 ou 2, dans lequel le moyen de traitement est en partie situé dans une station de contrôle (200) à terre et communique par radio avec le navire pour recevoir des informations relatives au niveau courant de remplissage de la au moins une cuve et à l'état courant de mouvement du navire.

4. Navire de transport de gaz liquéfié comportant une pluralité de cuves étanches et thermiquement isolantes, le navire comportant un système de gestion (100) selon l'une des revendications 1 à 3 pour chacune de ses cuves.

5. Procédé de gestion de la maintenance, mis en oeuvre par un système de gestion de la maintenance selon l'une quelconque des revendications 1 à 3, pour un navire (1) comportant au moins une cuve (2) étanche et thermiquement isolante pour le transport de gaz liquéfié, la cuve ayant une géométrie et une position sur le navire, le procédé comportant les étapes consistant à :

- déterminer (310) un niveau courant de remplissage de la cuve,
- déterminer (320) un état courant de mouvement du navire,
- déterminer (330) un indice de ballottement (IBi) courant à partir du niveau courant de remplissage de la cuve et de l'état courant de mouvement du navire, en prenant en compte la position et la géométrie de la cuve , dans lequel l'indice de ballottement (IBi) courant est obtenu par la lecture d'une valeur dans une table de correspondance à plusieurs entrées, une entrée correspondant au remplissage de la cuve, au moins une entrée correspondant à l'état courant de mouvement du navire et la valeur lue étant représentative d'une probabilité de détérioration de la cuve lorsqu'elle subit l'état courant du mouvement du navire,
- intégrer (340) l'indice de ballottement (IBi) courant déterminé dans un indice d'usure (IUi) qui prend en compte un historique des indices de ballottement,
- comparer (430, 450) l'indice d'usure à un premier seuil et indiquer si une inspection de ladite cuve (440, 460) doit être réalisée en fonction du résultat de la comparaison.

6. Procédé selon la revendication 5, dans lequel le navire comporte une pluralité de cuves (3, 4, 5, 6), dans lequel un indice d'usure (IUi) est déterminé pour chaque cuve et dans lequel le premier seuil correspond à un indice d'usure (IUi) d'une autre cuve afin d'indiquer (460) qu'une inspection de la cuve qui possède l'indice d'usure le plus élevé (Max(IUi)) doit être réalisée.

7. Procédé selon la revendication 5 ou 6, dans lequel on réalise une inspection de la cuve indiquée.

8. Procédé selon les revendications 6 et 7, dans lequel, après inspection de la cuve correspondant à l'indice d'usure le plus élevé (Max(IUi)), et si cette cuve inspectée est endommagée alors on détermine (480) la cuve suivante qui doit être inspectée comme étant la cuve ayant l'indice d'usure le plus élevé des cuves restantes.

9. Procédé selon les revendications 6 et 7, dans lequel, après inspection d'une cuve, et si cette cuve n'est pas endommagée alors on arrête l'inspection des cuves.

10. Procédé selon l'une des revendications précédentes 5 à 9, dans lequel la comparaison (450) de l'indice d'usure (IUi) à un seuil se fait lors d'une opération de maintenance du navire.

11. Procédé selon l'une des revendications précédentes 5 à 10, dans lequel déterminer un état courant de mouvement du navire comporte une détermination d'au moins un des paramètres suivants :

- hauteur des vagues,
- période des vagues,
- incidence des vagues par rapport à l'orientation du navire,
- vitesse du navire
- vibrations du navire,
- mouvements mesurés du navire.

12. Procédé selon l'une des revendications précédentes 5 à 11, dans lequel déterminer un indice de ballottement (Ibi) courant prend en compte au moins un parmi les paramètres additionnels d'état de structure suivants :

- nombre de cycle thermique subis par la cuve,
- élongation du navire,
- niveau de raidissage de la coque,
- nature du gaz liquéfié,
- niveau de remplissage des ballasts.

13. Procédé selon l'une des revendications précédentes 5 à 12, dans lequel intégrer l'indice de ballottement (IBi) courant correspond à une sommation d'indices de ballottement courants, les indices de ballottement courants étant calculés successivement au cours de période de mesure successives.

**Patentansprüche**

1. Wartungsverwaltungssystem (100, 200) für ein Schiff mit mindestens einem abgedichteten und wärmeisolierenden Gefäß zum Transport von Flüssiggas, wobei das System umfasst:

- mindestens einen Sensor (121, 230) für den Füllstand des Gefäßes zum Messen eines aktuellen Füllstands des mindestens einen Gefäßes,
- eine Vorrichtung zur Bewertung von Bewegungen (122, 123, 130, 230) des Schiffes, die geeignet ist, einen aktuellen Bewegungszustand des Schiffs zu bestimmen,
- eine Verarbeitungsvorrichtung (110, 210), die konfiguriert ist, um

- einen aktuellen Schwankungsindex (IBi) aus dem aktuellen Füllstand des Gefä-βes und dem aktuellen Bewegungszustand des Schiffs unter Berücksichtigung der Position und der Geometrie des Gefäßes zu bestimmen (330), wobei der aktuelle Schwankungsindex (IBi) durch das Lesen eines Wertes aus einer Tabelle mit mehreren Einträgen erhalten wird, wobei ein Eintrag der Füllung des Gefäßes entspricht, mindestens ein Eintrag dem aktuellen Bewegungszustand des Schiffes entspricht und der ausgelesene Wert repräsentativ für die Wahrscheinlichkeit einer Beschädigung des Gefäßes ist, wenn dieses dem aktuellen Bewegungszustand des Schiffes unterliegt,
- den ermittelten aktuellen Schwankungsindex (IBi) in einen Verschleißindex (IUi) zu integrieren (340), der eine Historie der Schwankungsindizes berücksichtigt,
- den Verschleißindex mit einem ersten Schwellenwert vergleichen (430, 450),

- weiterhin umfassend eine Warnvorrichtung (41), die anzeigt, ob eine Überprüfung des mindestens einen Gefäßes in Abhängigkeit von dem Ergebnis des Vergleichs durchgeführt (440, 460) werden sollte.

2. System nach Anspruch 1, wobei die Vorrichtung zur Auswertung der Bewegungen (123) des Schiffes eine Wetterstation umfasst, die die Höhe, Frequenz und Richtung der Wellen in der Umgebung des Schiffs misst.

3. System nach Anspruch 1 oder 2, wobei sich die Verarbeitungsvorrichtung teilweise in einer Kontrollstation (200) an Land befindet und über Funk mit dem Schiff kommuniziert, um Informationen über den aktuellen Füllstand des mindestens einen Gefäßes und den aktuellen Bewegungszustand des Schiffes zu empfangen.

4. Flüssiggastransportschiff mit einer Vielzahl von abgedichteten und wärmeisolierenden Gefäßen, wobei das Schiff für jedes seiner Gefäße ein Verwaltungssystem (100) nach einem der Ansprüche 1 bis 3 aufweist.

5. Verfahren zur Wartungsverwaltung, das von einem Wartungsverwaltungssystem nach einem der Ansprüche 1 bis 3 durchgeführt wird, für ein Schiff (1) mit mindestens einem abgedichteten und wärmeisolierenden Gefäß (2) für den Transport von Flüssiggas, wobei das Gefäß eine Geometrie und eine Position auf dem Schiff aufweist, wobei das Verfahren die folgenden Schritte umfasst:

- Bestimmen (310) eines aktuellen Füllstands des Gefäßes,
- Bestimmen (320) eines aktuellen Bewegungszustands des Schiffs,
- Bestimmen (330) eines aktuellen Schwankungsindex (IBi) aus dem aktuellen Füllstand des Gefäßes und dem aktuellen Bewegungszustand des Schiffs unter Berücksichtigung der Position und der Geometrie des Gefäßes, wobei der aktuelle Schwankungsindex (IBi) durch das Lesen eines Wertes aus einer Tabelle mit mehreren Einträgen erhalten wird, wobei ein Eintrag der Füllung des Gefäßes entspricht, mindestens ein Eintrag dem aktuellen Bewegungszustand des Schiffes entspricht und der ausgelesene Wert repräsentativ für eine Wahrscheinlichkeit der Beschädigung des Gefäßes ist, wenn diese dem aktuellen Bewegungszustand des Schiffes unterliegt,
- Integrieren (340) des ermittelten aktuellen Schwankungsindexes (IBi) in einen Verschleißindex (IUi), der eine Historie der Schwankungsindizes berücksichtigt,
- Vergleichen (430, 450) des Verschleißindex mit einem ersten Schwellenwert und Anzeigen, ob eine Überprüfung des Gefäßes (440, 460) in Abhängigkeit vom Ergebnis des Vergleichs durchgeführt werden soll.

6. Verfahren nach Anspruch 5, wobei das Schiff eine Vielzahl von Gefäßen (3, 4, 5, 6) aufweist, wobei ein Verschleißindex (IUi) für jedes Gefäß bestimmt wird und wobei der erste Schwellenwert einem Verschleißindex (IUi) eines anderen Gefäßes entspricht, um anzuzeigen (460), dass eine Überprüfung des Gefäßes, welches den höchsten Verschleißindex (Max(IUi)) aufweist, durchgeführt werden muss.

7. Verfahren nach Anspruch 5 oder 6, wobei eine Überprüfung des angegebenen Gefäßes durchgeführt wird.

8. Verfahren nach den Ansprüchen 6 und 7, wobei nach der Überprüfung des Gefäßes, das den höchsten Verschleißindex (Max(IUi)) aufweist, und wenn dieses geprüfte Gefäß beschädigt ist, das nächste Gefäß, welches inspiziert werden soll, als das Gefäß mit dem höchsten Verschleißindex der verbleibenden Gefäße bestimmt wird (480).

9. Verfahren nach den Ansprüchen 6 und 7, wobei nach der Überprüfung eines Gefäßes und wenn dieses Gefäß nicht beschädigt ist, die Überprüfung des Gefäßes beendet wird.

10. Verfahren nach einem der vorhergehenden Ansprüche 5 bis 9, wobei der Vergleich (450) des Verschleißindex (IUi) mit einem Schwellenwert während eines Wartungsvorgangs des Schiffs erfolgt.

11. Verfahren nach einem der vorhergehenden Ansprüche 5 bis 10, wobei das Bestimmen eines aktuellen Bewegungszustands des Schiffs eine Bestimmung von mindestens einem der folgenden Parameter umfasst:

Wellenhöhe,
Periode der Wellen,
Inzidenz der Wellen in Bezug auf die Ausrichtung des Schiffs,
Geschwindigkeit des Schiffs
Vibrationen des Schiffs,
gemessene Bewegungen des Schiffes.

12. Verfahren nach einem der vorhergehenden Ansprüche 5 bis 11, wobei das Bestimmen eines aktuellen Schwankungsindex (IBi) mindestens einen der folgenden zusätzlichen Parameter des Strukturzustands berücksichtigt:

Anzahl der thermischen Zyklen, denen das Schiff unterzogen wurde,
Längenausdehnung des Schiffes,
Grad der Versteifung des Schiffsrumpfes,
Art des Flüssiggases,
Füllstand der Ballastfüllung.

13. Verfahren nach einem der vorhergehenden Ansprüche 5 bis 12, wobei das Integrieren des aktuellen Schwankungsindex (IBi) einer Summierung von aktuellen Schwankungsindizes entspricht, wobei die aktuellen Schwankungsindizes nacheinander während aufeinanderfolgender Messperioden berechnet werden.

**Claims**

1. A system for managing maintenance (100, 200) for a ship including at least one sealed and thermally insulating tank for transporting liquefied gas, the system including:

- at least one tank filling level sensor (121, 230) for measuring a current level of filling of the at least one tank,
- a device for evaluating movements of the ship (122, 123, 130, 230) able to determine a current state of movement of the ship,
- a processing means (110, 210) configured:

- to determine (330) a current sloshing index (IBi) from the current level of filling of the tank and the current state of movement of the ship, taking into account the position and the geometry of the tank, in which determining the current sloshing index (IBi) consists in determining a probability of deterioration of the tank when it is subjected to the current state of movement of the ship, in which the current sloshing index (IBi) is obtained by reading a value in a multiple entry correspondence table, an entry corresponding to the filling of the tank, at least one entry corresponding to the current state of movement of the ship and the read value representing a probability of deterioration of the tank;
- integrating (340) the current sloshing index (IBi) determined into a wear index (IUi) that takes into account a history of the sloshing indices,
- comparing (430, 450) the wear index to a first threshold,

- a warning device (41) indicating if an inspection of the at least one tank must be carried out (440, 460) as a function of the result of the comparison.

2. The system as claimed in claim 1 in which the device for evaluating movements of the ship (123) includes a weather station that measures the height, the frequency and the direction of the waves in the environment of the ship.

3. The system as claimed in claim 1 or 2, in which the processing means is in part located in a monitoring station (200) on land and communicated by radio to the ship to receive information relating to the current level of filling of the at least one tank and the current state of movement of the ship.

4. A ship for transporting liquefied gas including a plurality of sealed and thermally insulating tanks, the ship including a management system (100) as claimed in any one of claims 1 to 3 for each of its tanks.

5. A method for managing maintenance, implemented by a system for managing maintenance according to any of the preceding claims 1 to 3, for a ship (1) including at least one sealed and thermally insulating tank for transporting liquefied gas, the tank having a geometry and a position on the ship. The method comprises the steps consisting in:

  - determining (310) a current filling level of the tank,
  - determining (320) a current state of movement of the ship,
  - determining (330) a current sloshing index IBi from the current filling level of the tank and the current state of movement of the ship, taking into account the position and the geometry of the tank, in which determining the current sloshing index (IBi) consists in determining a probability of deterioration of the tank when it is subjected to the current state of movement of the ship, in which the current sloshing index (IBi) is obtained by reading a value in a multiple entry correspondence table, an entry corresponding to the filling of the tank, at least one entry corresponding to the current state of movement of the ship and the read value representing a probability of deterioration of the tank;
  - integrating (340) the determined current sloshing index IBi into a wear index IUi that takes into account a history of the sloshing indices,
  - comparing (430, 450) the wear index to a first threshold in order to indicate if the tank (440, 460) needs to be inspected, depending on the result of the comparison.

6. The method as claimed in claim 5, in which the ship includes a plurality of tanks (3, 4, 5, 6), in which a wear index (IUi) is determined for each tank and in which the first threshold corresponds to a wear index (IUi) of another tank in order to indicate (460) that an inspection of the tank that has the highest wear index (Max(IUi)) must be carried out.

7. The method as claimed in claims 5 or 6, in which an inspection of the indicated tank is carried out.

8. The method as claimed in claims 6 and 7, in which, after inspection of the tank corresponding to the highest wear index (Max(IUi)), and if that inspected tank is damaged then there is determined (480) the next tank that must be inspected as being the tank having the highest wear index of the remaining tanks.

9. The method as claimed in claims 6 and 7, in which, after inspection of a tank, and if that tank is not damaged, then the inspection of the tanks is halted.

10. The method as claimed in any one of the preceding claims 5 to 9, in which the comparison (450) of the wear index (IUi) to a threshold is carried out during a maintenance operation on the ship.

11. The method as claimed in any one of the preceding claims 5 to 10, in which determining a current state of movement of the ship includes determining at least one of the following parameters:

  - height of the waves,
  - period of the waves,
  - angle of attack of the waves relative to the orientation of the ship,
  - speed of the ship,
  - vibrations of the ship,
  - measured movements of the ship.

12. The method as claimed in any one of the preceding claims 5 to 11, in which determining a current sloshing index (IBi) takes into account at least one of the following additional structure state parameters:

  - number of thermal cycles to which the tank has been subjected,
  - elongation of the ship,
  - level of stiffness of the hull,
  - nature of the liquefied gas,

- level of filing of the ballast tanks.

13. The method as claimed in any one of the preceding claims 5 to 12, in which integrating the current sloshing index (IBi) corresponds to a summation of current sloshing indices, the current sloshing indices being calculated successively during successive measurement periods.

[Fig. 1]

[Fig. 2]

[Fig. 3]

[Fig. 4]

[Fig. 5]

**RÉFÉRENCES CITÉES DANS LA DESCRIPTION**

**Documents brevets cités dans la description**

- US 8643509 B
- US 2005107963 A1
- US 2017183062 A1
- US 2016229492 A1